# EUROPEAN PATENT SPECIFICATION

(11) **EP 1 456 807 B1**
(45) Date of publication and mention of the grant of the patent: **19.08.2009**
(21) Application number: 02792910.8
(22) Date of filing: 05.12.2002
(51) Int. Cl.: G06K 11/06, G06F 3/033, G09G 5/28

(54) **CONTACTLESS SENSING INPUT DEVICE**
EINRICHTUNG MIT KONTAKTLOSEM MESSEINGANG
DISPOSITIF D'ENTREE A DETECTION SANS CONTACT

(30) Priority: 21.12.2001 US 342982 P; 21.12.2001 US 343066 P; 23.05.2002 US 154252
(43) Date of publication of application: 15.09.2004
(73) Proprietor: Sony Ericsson Mobile Communications AB, 221 88 Lund (SE)
(72) Inventor: KLINGHULT, Gunnar, S-227 31 Lund (SE)
(74) Representative: Asketorp, Göran
(86) International application number: PCT/EP2002/013813
(87) International publication number: WO 2003/054782

(56) References cited:
- EP-A- 1 128 321
- EP-A- 1 223 541
- WO-A-00/70438
- US-A- 5 831 553

## Description

### BACKGROUND OF THE INVENTION

### Technical Field of the Invention

The present invention relates generally to user interfaces for electronic devices and, in particular, to a rotating disk input device having contactless sensing and tactile feedback.

### Description of Related Art

Controllers and input devices within electronic equipment provide control for various operations of the electronic equipment such as navigation through menus. Input devices are of different configurations, depending on the electronic equipment and the desired functions of the user interface. A conventional input device that is used in mobile phones and other electronic equipment is a joystick controller. As the name indicates, the input device is formed of a protruding arm member that may be moved in any direction to navigate a menu or to perform any other function. For example, the joystick's protruding arm may be moved upwards resulting in a contact with a conducting member within the base of the joystick. This contact will generate a signal that enables a certain function, i.e., scrolling up a menu. The downward movement of the joystick's protruding arm will enable the joystick to perform a similar function, i.e., scrolling down the menu.

Another widely used input device is a circular disk type device. This input device has a circular disk which may be turned back and forth to perform control functions, i.e., scroll through menus, within the electronic equipment. Conventionally, the circular disk contains a plurality of electric contacts thereon that are configured to contact at least one electric terminal external to the disk, thus closing a circuit, which produces a signal used plurality of electric contacts will slide over the electric terminal and will generate a signal when each electric contact contacts the electric terminal. This generated signal is then used in a control operation, such as scrolling up/down a menu.

A problem with the circular disk having the electric contacts sliding over the electric terminal is mechanical wear. The sliding electric contacts will be in mechanical contact with the electric terminal and will be subject to mechanical wear, thus reducing the efficiency of the electric contacts and eventually causing partial or complete failure. Moreover, dust and moisture may affect both the electrical and mechanical components of the input device, leading to an undesired deterioration in the control/navigation operation of the input device.

In view of the foregoing, there is a need for an input device that is constructed so as to reduce or eliminate the electrical and mechanical wear of the components within the input device as well as improve the performance of the input device and still have tactile feedback.

In the prior art, there are a number of patent documents that define the general state of the art.

US 5,831,553 discloses an input apparatus for a data processing system. The input apparatus, for example a mouse or a track ball, comprises a member that is rotatable by manipulation by a user. The rotation causes a change of a magnetic field, which change is detected by a detector. The member in the apparatus in accordance with the arrangement of this document comprises a non-homogeneous distribution of a soft-magnetic material that, upon rotation, changes a magnetic field externally applied to the member by a magnet, causing thereby a series of pulses. The direction of rotation is then determined by analysis of the pulses.

WO 00/704 38 relates to a method for pointing out information on a display using a pointing device. The pointing device comprises a movable pointing element and a detector. In accordance with this arrangement, the movement of the pointing element affects a magnetic field the changes of which are detected by the detector and adapted so as to point out information.

EP 1 128 321 concerns a roller responding to a force applied by a user and for providing a multi-phase coil signal containing information about the force applied by the user. The roller has a magnetic rotor and a multi-phase coil member. The magnetic rotor responds to the force applied by the user, for providing a magnetic rotor force. The multi-phase coil member responds to the magnetic rotor force, for providing a multi-phase coil signal containing information about the force applied by the user. The force applied by the user may e.g. include a rotational force applied by the user to a track ball or any force applied by the user to a mouse that causes the roller to move or rotate. In this case, the multi-phase coil signal contains information about the force applied on the track ball or mouse by the user.

### SUMMARY OF THE INVENTION

According to an aspect of the invention an input apparatus according to claim 1 is provided. According to another aspect of the invention a method according to claim 9 is provided.

### BRIEF DESCRIPTION OF THE DRAWINGS

For a more complete understanding of the present invention, reference is made to the following detailed description taken in conjunction with the accompanying drawings wherein:
FIGURE 1 is a top view of the input device in accordance with one embodiment of the present invention;
FIGURE 2 is a side view of the input device along lines 2-2 of FIGURE 1;
FIGURE 3 is a cross sectional view of the input device along lines 3-3 of FIGURE 1;
FIGURE 4A is a top view of the input device in accordance with an alternative embodiment of the present invention;
FIGURE 4B is a timing diagram illustrating the signals generated by the input device of FIGURE 4A; and
FIGURE 5 is a flow diagram illustrating the operation of the input device of FIGURE 1.

### DETAILED DESCRIPTION OF THE INVENTION

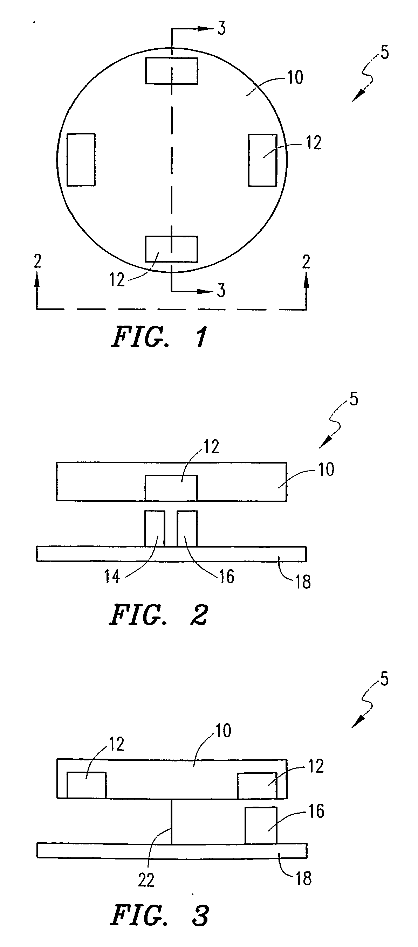

Reference is now made to the Drawings wherein like reference numerals denote like or similar parts throughout the various Figures. Although the innovative teachings of the present application are described with reference to particular embodiments, it should be understood that the embodiments described herein provide only a few examples of the many advantageous uses of the innovative teachings herein. Referring now to FIGURES 1, 2, and 3, there is illustrated a top view, a side view, and a cross sectional view, respectively, of an input device 5 according to an exemplary embodiment of the present invention. The input device 5 can be used in a mobile phone or any other electronic equipment requiring support for navigation or control. The input device 5 includes a substantially circular disk 10 that is constructed of a non-ferromagnetic material. The circular disk 10 includes a plurality of ferromagnetic plates 12 attached thereto or incorporated therein along the periphery of the circular disk 10. The ferromagnetic plates 12 can be disposed on one side of the circular disk 10, disposed within the circular disk 10, or externally protruding from the circular disk 10. The ferromagnetic plates 12 can be fabricated from any ferromagnetic material, such as steel. The circular disk 10 is mounted on a printed circuit board (PCB) 18 or secured to any component within the electronic device using a support member 22 in such a way as to allow rotation of the circular disk 10. Generally, the support member 22 is rotatably coupled to the central axis of the circular disk 10, i.e., the center of gravity of the disk, to enable balanced rotation of the circular disk 10.

The input device 5 includes therein a magnet 14 and a magnetic sensor 16 (e.g., a hall sensor) disposed on the PCB 18 and situated adjacent to the periphery of the circular disk 10. The magnetic sensor 16 has a specified sensitivity axis. The magnetic sensor 16 outputs a signal when it reaches its hysteresis level. This implies that when the magnetic field, as described hereinafter, exceeds a minimum level, the magnetic sensor 16 outputs the signal. The magnet 14 is positioned to attract each ferromagnetic plate 12 when the plate 12 is within a predetermined distance from the magnet 14. The magnetic sensor 16 is situated on the PCB 18 adjacent to the magnet 14 and with its sensitivity axis oriented parallel to the magnet's 14 north-to-south pole such that, when the plate 12 passes within a predetermined distance from the magnetic sensor 16, the magnetic sensor 16 generates a signal that is provided to a microcontroller (not shown) of the electronic device. In response to the signal, the microcontroller can, for example, effectuate a scrolling operation on a display screen of the electronic device. More specifically, when the plate 12 passes over the magnet 14 /magnetic sensor 16 combination, the magnetic field between the plate and the magnet 14/magnetic sensor 16 combination becomes concentrated and increases. The air gap between the magnet 14 and the plate 12, which corresponds to the magnetic resistance (i.e., reluctance), decreases. In response to the concentration of the magnetic field, the magnetic sensor 16 generates a detectable signal.

The circular disk 10 is positioned such that a gap separates the circular disk 10 and the associated ferromagnetic plate 12 from the magnet 16 and the magnetic sensor 16. This gap will enable rotation of the circular disk 10 without contacting the magnet 14 and the magnetic sensor 16. Moreover, when the ferromagnetic plate 12 passes over the magnet 14 and the magnetic sensor 16, the magnetic field is concentrated across the gap, and there is no need to have any contact between the plate 12 and the magnet 14 or the magnetic sensor 16. It should be understood that the gap can be of any distance that enables the attraction between the magnet 14 and the plate 12 to provide enough concentration of the magnetic field to activate the magnetic sensor 16.

When the ferromagnetic plate 12, magnet 14, and magnetic sensor 16 form the concentrated magnetic field, the magnetic sensor 16 outputs a signal through the PCB 18 to another component connected to the PCB 18, such as a microcontroller (not shown). The microcontroller may control the navigation of a menu and display the results on a screen, i.e., LCD screen (not shown). However, it should be understood that the signal produced by the magnetic sensor 16 can be used in any desired control application.

During the rotation of the circular disk 10 and when one of the ferromagnetic plates 12 within the circular disk 10 passes over the magnet 14 and the magnetic sensor 16, an attractive force between the magnet 14 and the plate 12 is applied to the circular disk 10 which results in a rotational resistance, i.e., slight stopping, of the circular disk 10. This rotational resistance provides a tactile feedback to the user of the input device corresponding to a certain operation/function being performed due to the signal generated by the magnetic sensor 16. The tactile feedback due to the attraction between the magnet 14 and the ferromagnetic plate 12 allows the user of the input device 5 to feel the rotational resistance and thus provide the user with a feeling of the operation of the input device 5. For example, this operation can be scrolling through a menu and during each step of the scroll through the menu, the user feels a rotational resistance (i.e., stopping) indicative of one step of the scroll through the menu. The user will feel multiple rotational resistance feedbacks if the user rapidly scrolls through multiple entries of the menu, each rotational resistance feedback corresponding to one step.

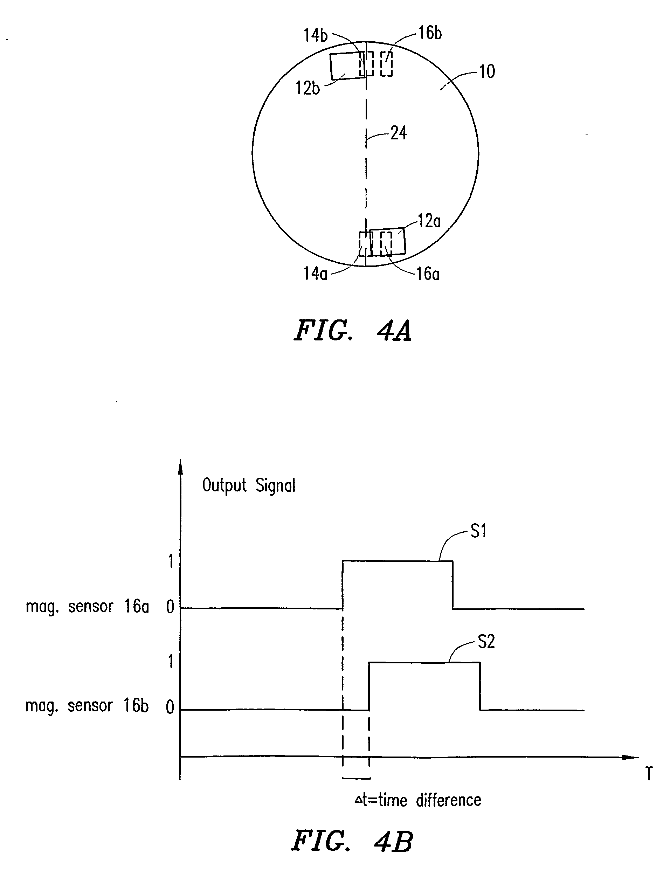

Referring now to FIGURES 4A and 4B, there is illustrated an alternative embodiment of the input device 5 of the present invention and a timing diagram of the signals generated by the input device 5 of the alternative embodiment, respectively. The input device 5 of this alternative embodiment is essentially the same as described in connection with FIGURES 1-3. In this embodiment, however, the input device 5 has at least two magnets 14a and 14b and at least two magnetic sensors 16a and 16b. Each magnetic sensor 16a or 16b is located adjacent to, and with its sensitivity axis oriented parallel to, the magnet 14a or 14b associated therewith. The magnets 14a and 14b can be symmetrically placed adjacent to the periphery of the circular disk 10 (i.e., on opposite ends of the disk) so that the attracting force from the magnets 14 on the ferromagnetic plate 12 will not cause an unbalanced force on, or rotation of the disk 10. The magnetic sensors 16a and 16b are located adjacent to the magnets 14a and 14b, respectively, and are placed asymmetrically with respect to each other. In other words, the magnetic sensors 16a and 16b are located on one side of the axis of the circular disk 10. The magnetic sensors 16a and 16b are located such that, during the rotation of the circular disk 10, a first plate 12a comes within a predetermined distance from the first magnet sensor 16a before a second plate 12b on the opposite end of the circular disk 10 comes within the predetermined distance from the second magnet sensor 16b.

As the circular disk 10 is rotated, a first ferromagnetic plate 12a passes within a predetermined distance from the first magnet 14a and is thus attracted thereto. A first signal (S1) is then generated by the first magnetic sensor 16a (i.e., a high logic value appearing on the output of the first magnetic sensor 16a) due to the creation of a concentrated magnetic field, as described hereinabove. At the same time, a second ferromagnetic plate 12b that is symmetrical to the first plate 12a is in proximity to the second magnet 14b and is attracted thereto. However, a concentrated magnetic field has not been created (i.e., the magnetic field has not exceeded the minimum level necessary to generate a signal) due to the location of the second magnetic sensor 16b being asymmetrical to the first magnetic sensor 16a. Upon further rotation of the disk 12, the second ferromagnetic plate 12b passes over the second magnet 14b and a concentrated magnetic field is created between the second magnet 14b and the second ferromagnetic plate 12b which results in the generation of a second signal (S2) by the second magnetic sensor 16b (i.e., a high logic value appearing on the output of the second magnetic sensor 16b).

This configuration enables the second magnetic sensor 16b to generate the second signal (S2) relatively soon after the first magnetic sensor 16a generates the first signal (S1). The rotational direction of the circular disk 10 can then be determined based on the sequence in which the first and second magnetic sensors 16a and 16b generate the first (S1) and second (s2) signals. For example, if the generation of the first signal (S1) by the first magnetic sensor 16a is followed by the generation of the second signal (S2) by the second magnetic sensor 16b, it can be determined that the rotation of the circular disk 10 is in a first direction (e.g., clockwise). On the other hand, if the second signal (S2) is generated prior to the first signal (S1), it can be determined that the rotation of the circular disk is in a second direction (e.g., counterclockwise).

It should be understood that the tactile feedback provided to the user of the input device 5 operates in the same way as described hereinabove by providing a rotational resistance when the ferromagnetic plate is in proximity to the magnet 14. In a preferred embodiment, the time difference (Δt) between the first signal (S1) generated by the first magnetic sensor 16a and the second signal (S2) generated by the second magnetic sensor 16b, is small enough in order for the user to feel that the two attractions between the two magnets 14a and 14b and the two plates 12a and 12b, are just a single attraction. This creates a single tactile feedback to the user indicative of the signal produced to perform the desired function while still enabling the input device to determine the rotational direction of the circular disk 10.

It should be understood that other implementations of determining the rotational direction of the circular disk 10 are possible. For example, at least two magnets 14a and 14b and at least two magnetic sensors 16a and 16b could be positioned such that, as the circular disk 10 is rotated, the second magnetic sensor 16b begins generating a signal before the first magnetic sensor 16a ceases generating a signal (i.e., due to the ferromagnetic plate being wide enough to produce a concentrated magnetic field involving both magnetic sensors 16a and 16b). Based on which magnetic sensor 16a or 16b began generating a signal first, the rotational direction can be determined. Moreover, such a configuration would help avoid potentially erroneous determinations of rotational direction that could occur in the previous configuration when the direction of rotation is changed after only one of the magnetic sensors 16a or 16b detects a concentrated magnetic field.

In another alternative, a single or multiple magnet/magnetic sensor pairs could be used in connection with different ferromagnetic plate 12 thicknesses, which results in different magnetic field strengths when one of the plates forms a concentrated magnetic field with the magnet 14 and the magnetic sensor 16. Based on the magnetic field strength, the signal strength generated by the magnetic sensor 16 could be different. In this case, the rotational direction of the disk 10 could be determined by comparing the previous signal strength to the current signal strength.

It should be understood that having several ferromagnetic plates 12 placed on the periphery of the circular disk 10 can increase the resolution of the scrolling operation. Thus the number of steps performed by a complete rotation of the circular disk 10 can be increased when there are more plates 12 on the circular disk 10. For example, if the circular disk 10 has four ferromagnetic plates 12, then a signal can be generated at each quarter of a turn. Increasing the number of ferromagnetic plates 12 thereby decreases the number of rotations needed for a user to scroll through a menu.

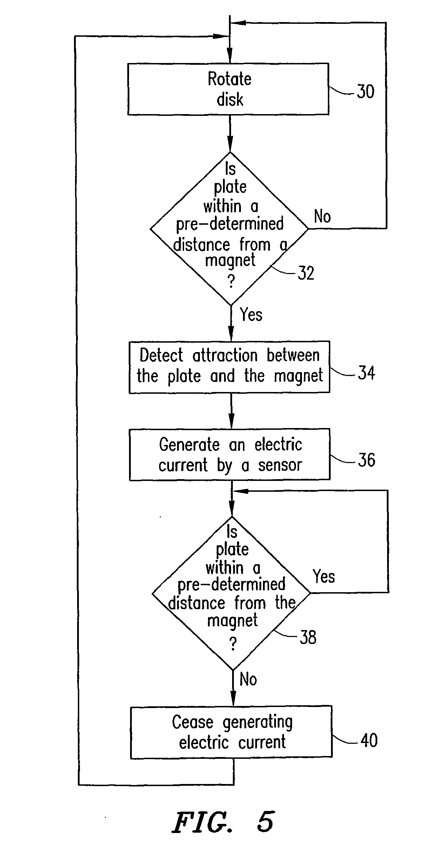

FIGURE 5 is a flow diagram illustrating the operation of the input device 5 of the exemplary embodiment of FIGURES 1, 2, and 3. Initially, it is assumed that the input device 5 is in an inactive state (i.e., no signal is being generated). Subsequently, a disk 10 within the input device 5 is rotated at step 30 indicating a desire to perform a function, such as scrolling through a menu. As the disk 10 is rotated, if it is determined at step 32 that a ferromagnetic plate 12 included in the disk 10 is within a predetermined distance from a magnet 14, an attraction between the plate 12 and the magnet 14 is detected at step 34. If the disk 10 is not rotated by a sufficient amount to cause the ferromagnetic plate 12 to be within the predetermined distance from the magnet 14, then an attraction is not detected; instead, the process returns to step 30 to await additional rotation of the disk 10.

When the attraction of the plate 12 to the magnet 14 does form a concentrated magnetic field with the magnet 14 and a magnetic sensor 16, the concentrated magnetic field enables the magnetic sensor 16 to begin generating an electric current/signal at step 36. This electric current/signal can be used to perform a control operation, i.e., scroll up/down a menu. As long as the ferromagnetic plate 12 remains within the predetermined distance from the magnet 14, the electric current/signal continues to be generated. Accordingly, at step 38, it is determined whether the ferromagnetic plate 12 has moved outside of the predetermined distance from the magnet 14. If not, the magnetic sensor 16 continues to generate the electric current/signal. However, once the ferromagnetic plate 12 is determined at step 38 to have moved outside of the predetermined distance (i.e., through additional rotation of the disk 10), the generation of the electric current/signal ceases at step 40, and the process returns to step 30. The process can be repeated, using one or more magnets and/or using one or more ferromagnetic plates, any number of times to, for example, navigate through a menu, whereby each signal enables a scrolling step in the menu.

The present invention has been described above with reference to specific embodiments. However, other embodiments than the above described are equally possible within the scope of the invention. The different features and steps of the invention may be combined in other combinations than those described. The scope of the invention is only limited by the appended patent claims.

## Claims

1. A contactless sensing user input apparatus for an electronic device, comprising:
a rotatable member (10) having several ferromagnetic elements (12a, 12b) each arranged at the same radial distance from a center of the rotatable member; and
a circuit board (18) having first and second magnets (14a, 14b) and first and second magnetic sensors (16a, 16b) each located adjacent to the corresponding magnet and oriented magnetically parallel to said corresponding magnet in order to form first and second magnet-sensor-combinations arranged at substantially the same radial distance as said ferromagnetic elements (12a, 12b),
**characterised in that**:
the rotatable member is a substantially circular disk (10) and the ferromagnetic elements are ferromagnetic plates (12a, 12b) located adjacent to a periphery of said circular disk (10) and attached to said circular disk (10); and
the magnets (14a, 14b) of said first and second magnet-sensor-combinations are symmetrically arranged adjacent to the periphery of the circular disk, and the magnetic sensors (16a, 16b) of said magnet-sensor-combinations are arranged asymmetrically with respect to each other, whereby
as the circular disk (10) is rotated said ferromagnetic plates (12a, 12b) pass over the magnet-sensor-combinations to cause the magnetic sensors (16a, 16b) to generate detectable signals, and the rotational direction of the circular disk (10) is determined based on the order in which the magnetic sensors (16a, 16b) generate the detectable signals.

2. The input apparatus of claim 1, wherein the circular disk (10) is mounted on the circuit board (18) by means of a support member (22), the support member (22) being rotatably coupled to the center of the circular disk (10) .

3. The input apparatus of claim 1, wherein the magnet (14a, 14b) and the magnetic sensor (16a, 16b) of each magnet-sensor-combination are arranged after each other in the peripheral direction.

4. The input apparatus of claim 1, wherein the first and second magnets (14a, 14b) are arranged diametrically opposite to each other corresponding to a diameter (24) of the circular disk (10) and the first and second magnetic sensors (16a, 16b) are arranged on the same side of each magnet (14a, 14b) with respect to said diameter (24), such that during the rotation of the circular disk (10), a first ferromagnetic plate (12a) comes within a predetermined distance from a first magnetic sensor (16a) before a second ferromagnetic plate (12b) on the opposite end of the diameter (24) of the circular disk (10) comes within the predetermined distance from a second magnetic sensor (16b).

5. The user input apparatus of claim 1, wherein a magnetic force between one of said ferromagnetic plates (12a, 12b) and one of said magnets (14a, 14b) causes a rotational resistance that is detectable by a user when one of said ferromagnetic plates (2a, 12b) passes within said predetermined distance from one of said magnet (14a, 14b) as said user rotates the circular disk (10).

6. The user input apparatus of claim 1, **characterized in that**:
the circuit board (18) comprises a plurality of magnets (14a, 14b) and a plurality of magnetic sensors (16a, 16b), wherein each magnetic sensor (16a, 16b) is arranged adjacent to, and with its sensitivity axis oriented parallel to, a corresponding magnet (14a, 14b); wherein
each magnet (14a, 14b) and each corresponding magnetic sensor (16a, 16b) are arranged near the periphery of said circular disk (10).

7. The user input apparatus of claim 1, wherein the magnetic sensors (16a, 16b) are arranged to output said detectable signals responsive to a concentrated magnetic field formed by at least the magnet (14a, 14b), the magnetic sensor (16a, 16b), and the ferromagnetic plate (12a, 12b), when one of the ferromagnetic plates (12a, 12b) passes over one of the magnet-sensor-combinations.

8. The user input apparatus of any one of the preceding claims, wherein the electronic device is a mobile phone.

9. A method for contactless sensing operation of an input device, the input device comprising:
a rotatable member (10) having several ferromagnetic elements (12a, 12b) each arranged at the same radial distance from a center of the rotatable member, wherein the rotatable member is a substantially circular disk (10) and the ferromagnetic elements are ferromagnetic plates (12a, 12b) located adjacent to a periphery of said circular disk (10) and attached to said circular disk (10); and
a circuit board (18) having first and second magnets (14a, 14b) and first and second magnetic sensors (16a, 16b) each located adjacent to the corresponding magnet and oriented magnetically parallel to said corresponding magnet in order to form first and second magnet-sensor-combinations arranged at substantially the same radial distance as said ferromagnetic plates (12a, 12b), and wherein the magnets (14a, 14b) of said first and second magnet-sensor-combinations are symmetrically arranged adjacent to the periphery of the circular disk (10), and the magnetic sensors (16a, 16b) of said magnet-sensor-combinations are arranged asymmetrically with respect to each other,
the method comprising the following steps:
passing said ferromagnetic plates (12a, 12b) over the magnet-sensor-combinations by rotating the circular disk (10);
generating detectable signals by the magnetic sensors (16a, 16b) in response to the passage of the ferromagnetic plates (12a, 12b) over the magnet-sensor-combinations; and
determining a rotational direction of the circular disk (10) based on the order in which the magnetic sensors (16a, 16b) generate the detectable signals.

10. The method of claim 9, wherein generating detectable signals comprises generating detectable signals in response to a detection of a concentrated magnetic field between the magnet (14a, 14b), the magnetic sensor and one of the ferromagnetic plates (12a, 12b).

11. The method of claim 9, further comprising:
a magnetic force between one of said ferromagnetic plates and one of said magnets causing a rotational resistance that is detectable by a user as opposing the rotation of the circular disk (10) when one of the ferromagnetic plates (12a, 12b) passes within the predetermined distance from the magnet (14a, 14b), as said user rotates the circular disk.

12. The method of claim 9, further comprising determining the rotational direction of the circular disk (10) using a plurality of magnets (14a, 14b).

13. The method of claim 9, wherein the first and second magnets (14a, 14b) are arranged diametrically opposite to each other corresponding to a diameter (24) of the circular disk (10) and the first and second magnetic sensors (16a, 16b) are arranged on the same side of each magnet (14a, 14b) with respect to said diameter (24), such that during the rotation of the circular disk (10), a first ferromagnetic plate (12a) comes within a predetermined distance from a first magnetic sensor (16a) before a second ferromagnetic plate (12b) on the opposite end of the diameter (24) of the circular disk (10) comes within the predetermined distance from a second magnetic sensor (16b), and wherein determining the rotational direction of the circular disk (10) includes:
determining the order in which the first and second magnetic sensors (16a, 16b) generate their respective detectable signals.

## Patentansprüche

1. Kontaktlose Nutzereingabe-Sensorvorrichtung für ein elektronisches Gerät, welche aufweist:
ein drehbares Konstruktionsteil (10) mit mehreren ferromagnetischen Elementen (12a, 12b), welche jeweils im gleichen radialen Abstand von einer Mitte des drehbaren Konstruktionsteils angeordnet sind; und
eine Leiterplatte (18) mit ersten und zweiten Magneten (14a, 14b) sowie ersten und zweiten magnetischen Sensoren (16a, 16b), welche jeweils neben dem entsprechenden Magneten angeordnet und magnetisch parallel zu ihm ausgerichtet sind, um erste und zweite Magnet-Sensor-Kombinationen zu bilden, die im Wesentlichen jeweils im gleichen radialen Abstand wie die ferromagnetischen Elemente (12a, 12b) angeordnet sind, **dadurch gekennzeichnet, dass**
das drehbare Konstruktionsteil eine im Wesentlichen kreisförmige Scheibe (10) ist und die ferromagnetischen Elemente ferromagnetische Platten (12a, 12b) sind, welche nahe an einem Rand der kreisförmigen Scheibe (10) angeordnet und mit der kreisförmigen Scheibe (10) verbunden sind; und
die Magnete (14a, 14b) der ersten und zweiten Magnet-Sensor-Kombinationen nahe am Rand der kreisförmigen Scheibe (10) symmetrisch und die magnetischen Sensoren (16a, 16b) der Magnet-Sensor-Kombinationen asymmetrisch zueinander angeordnet sind, wobei
bei Drehung der kreisförmigen Scheibe die ferromagnetischen Platten (12a, 12b) über die Magnet-Sensor-Kombinationen bewegt werden, um die magnetischen Sensoren (16a, 16b) zur Erzeugung erfassbarer Signale anzuregen, und die Drehrichtung der kreisförmigen Scheibe (10) sich nach der Reihenfolge richtet, in der die magnetischen Sensoren (16a, 16b) die erfassbaren Signale erzeugen.

2. Eingabevorrichtung nach Anspruch 1, wobei die kreisförmige Scheibe (10) mittels eines Stützglieds (22) auf der Leiterplatte (18) montiert ist, welches drehbar mit der Mitte der kreisförmigen Scheibe (10) verbunden ist.

3. Eingabevorrichtung nach Anspruch 1, wobei Magnet (14a, 14b) und magnetischer Sensor (16a, 16b) jeder Magnet-Sensor-Kombination nacheinander in Richtung zum Rand angeordnet sind.

4. Eingabevorrichtung nach Anspruch 1, wobei die ersten und zweiten Magnete (14a, 14b) diametral entgegengesetzt bezüglich eines Durchmessers (24) der kreisförmigen Scheibe (10) angeordnet sind, und die ersten und zweiten Sensoren (16a, 16b) an der bezüglich des Durchmessers (24) gleichen Seite jedes Magneten (14a, 14b) so angeordnet sind, dass während der Drehung der kreisförmigen Scheibe (10) eine erste ferromagnetische Platte (12a) einen vorgegebenen Abstand von einem ersten magnetischen Sensor (16a) erreicht, bevor eine zweite ferromagnetische Platte (12b) am gegenüberliegenden Ende des Durchmessers (24) der kreisförmigen Scheibe (10) in den vorgegebenen Abstand von einem zweiten magnetischen Sensor (16b) kommt.

5. Nutzereingabevorrichtung nach Anspruch 1, wobei eine magnetische Kraft zwischen einer der ferromagnetischen Platten (12a, 12b) und einem der Magneten (14a, 14b) einen für den Nutzer fühlbaren Drehwiderstand verursacht, sobald sich eine der ferromagnetischen Platten (12a, 12b) innerhalb des vorgegebenen Abstands von einem der Magneten (14a, 14b) bewegt, während der Nutzer die kreisförmige Scheibe (10) dreht.

6. Nutzereingabevorrichtung nach Anspruch 1, **dadurch gekennzeichnet, dass**:
die Leiterplatte (18) mehrere Magnete (14a, 14b) und mehrere magnetische Sensoren (16a, 16b) aufweist, wobei jeder magnetische Sensor (16a, 16b) neben einem entsprechenden Magneten (14a, 14b) mit parallel zu ihm ausgerichteter Empfindlichkeitsachse angeordnet ist; wobei
jeder Magnet (14a, 14b) und jeder entsprechende magnetische Sensor (16a, 16b) nahe am Rand der kreisförmigen Scheibe (10) angeordnet ist.

7. Nutzereingabevorrichtung nach Anspruch 1, wobei die magnetischen Sensoren (16a, 16b) die erfassbaren Signale ausgeben können, die aufgrund eines konzentrierten Magnetfelds entstehen, welches durch mindestens den Magneten (14a, 14b), den magnetischen Sensor (16a, 16b) und die ferromagnetische Platte (12a, 12b) erzeugt wird, sobald sich eine der ferromagnetischen Platten (12a, 12b) über eine der Magnet-Sensor-Kombinationen bewegt.

8. Nutzereingabevorrichtung nach einem der vorstehenden Ansprüche, wobei das elektronische Gerät ein Mobiltelefon ist.

9. Verfahren für den kontaktlosen Sensorbetrieb eines Eingabegeräts, welches aufweist:
ein drehbares Konstruktionsteil (10) mit mehreren ferromagnetischen Elementen (12a, 12b), welche jeweils im gleichen radialen Abstand von einer Mitte des drehbaren Konstruktionsteils angeordnet sind, wobei das drehbare Konstruktionsteil eine im Wesentlichen kreisförmige Scheibe (10) ist und die ferromagnetischen Elemente ferromagnetische Platten (12a, 12b) sind, welche nahe an einem Rand der kreisförmigen Scheibe (10) angeordnet und mit der kreisförmigen Scheibe (10) verbunden sind; und
eine Leiterplatte (18) mit ersten und zweiten Magneten (14a, 14b) sowie ersten und zweiten magnetischen Sensoren (16a, 16b), welche jeweils neben dem entsprechenden Magneten angeordnet und magnetisch parallel zu ihm ausgerichtet sind, um erste und zweite Magnet-Sensor-Kombinationen zu bilden, die im Wesentlichen jeweils im gleichen radialen Abstand wie die ferromagnetischen Elemente (12a, 12b) angeordnet sind, und wobei die Magnete (14a, 14b) der ersten und zweiten Magnet-Sensor-Kombinationen nahe am Rand der kreisförmigen Scheibe (10) symmetrisch und die magnetischen Sensoren (16a, 16b) der Magnet-Sensor-Kombinationen asymmetrisch zueinander angeordnet sind, und das Verfahren die folgenden Schritte aufweist:
Bewegung der ferromagnetischen Platten (12a, 12b) über die Magnet-Sensor-Kombinationen durch Drehen der kreisförmigen Scheibe (10);
Erzeugung erfassbarer Signale durch die magnetischen Sensoren (16a, 16b) als Reaktion auf die Bewegung der ferromagnetischen Platten (12a, 12b) über die Magnet-Sensor-Kombinationen; und
Ermittlung einer Drehrichtung der kreisförmigen Scheibe (10) anhand der Reihenfolge, in der die magnetischen Sensoren (16a, 16b) die erfassbaren Signale erzeugen.

10. Verfahren nach Anspruch 9, wobei die Erzeugung erfassbarer Signale die Erzeugung erfassbarer Signale aufgrund einer Erkennung eines konzentrierten Magnetfelds zwischen dem Magneten (14a, 14b), dem magnetischen Sensor (16a, 16b) und einer der ferromagnetischen Platten (12a, 12b) enthält.

11. Verfahren nach Anspruch 9, welches weiterhin aufweist:
eine magnetische Kraft zwischen einer der ferromagnetischen Platten (12a, 12b) und einem der Magneten (14a, 14b), welche einen Drehwiderstand verursacht, der für einen Nutzer als entgegengerichtet zur Drehung der kreisförmigen Scheibe (10) fühlbar ist, sobald sich eine der ferromagnetischen Platten (12a, 12b) innerhalb des vorgegebenen Abstands vom Magneten (14a, 14b) bewegt, während der Nutzer die kreisförmige Scheibe (10) dreht.

12. Verfahren nach Anspruch 9, welches weiterhin aufweist:
Ermittlung der Drehrichtung der kreisförmigen Scheibe (10) mittels mehrerer Magnete (14a, 14b).

13. Verfahren nach Anspruch 9, wobei die ersten und zweiten Magnete (14a, 14b) diametral entgegengesetzt bezüglich eines Durchmessers (24) der kreisförmigen Scheibe (10) angeordnet sind, und die ersten und zweiten Sensoren (16a, 16b) an der bezüglich des Durchmessers (24) selben Seite jedes Magneten (14a, 14b) so angeordnet sind, dass während der Drehung der kreisförmigen Scheibe (10) eine erste ferromagnetische Platte (12a) einen vorgegebenen Abstand von einem ersten magnetischen Sensor (16a) erreicht, bevor eine zweite ferromagnetische Platte (12b) am gegenüberliegenden Ende des Durchmessers (24) der kreisförmigen Scheibe (10) in den vorgegebenen Abstand von einem zweiten magnetischen Sensor (16b) kommt, und wobei die Ermittlung der Drehrichtung der kreisförmigen Scheibe (10) enthält:
Ermittlung der Reihenfolge, in welcher die ersten und zweiten magnetischen Sensoren (16a, 16b) ihre jeweiligen erfassbaren Signale erzeugen.

## Revendications

1. Appareil de saisie utilisateur à détection sans contact, destiné à un dispositif électronique, comprenant :
un organe rotatif (10) possédant plusieurs éléments ferromagnétiques (12a, 12b), chacun étant disposé à la même distance radiale d'un centre de l'organe rotatif ; et
une carte de circuits (18) possédant des premier et second aimants (14a, 14b) et des premier et second capteurs magnétiques (16a, 16b), chacun étant adjacent à l'aimant correspondant et étant orienté de manière magnétiquement parallèle audit aimant correspondant afin de former des première et seconde combinaisons aimant-capteur, disposées à substantiellement la même distance radiale que lesdits éléments ferromagnétiques (12a, 12b) ;
**caractérisé en ce que** :
l'organe rotatif est un disque (10) substantiellement circulaire et les éléments ferromagnétiques sont des plaques ferromagnétiques (12a, 12b) adjacentes à une périphérie dudit disque circulaire (10) et fixées audit disque circulaire (10) ; et
les aimants (14a, 14b) desdites première et seconde combinaisons aimant-capteur sont disposés symétriquement, adjacents à la périphérie du disque circulaire, tandis que les capteurs magnétiques (16a, 16b) desdites combinaisons aimant-capteur sont agencés de manière asymétrique l'un par rapport à l'autre ;
si bien que, lorsque le disque circulaire (10) tourne, lesdites plaques ferromagnétiques (12a, 12b) passent au-dessus des combinaisons aimant-capteur de telle sorte que les capteurs magnétiques (16a, 16b) produisent des signaux détectables et la direction de rotation du disque circulaire (10) est déterminée sur la base de l'ordre dans lequel les capteurs magnétiques (16a, 16b) produisent les signaux détectables.

2. Appareil de saisie selon la revendication 1, dans lequel le disque circulaire (10) est monté sur la carte de circuits (18) à l'aide d'un organe de support (22), l'organe de support (22) étant couplé de manière rotative au centre du disque circulaire (10).

3. Appareil de saisie selon la revendication 1, dans lequel l'aimant (14a, 14b) et le capteur magnétique (16a, 16b) de chaque combinaison aimant-capteur sont disposés l'un après l'autre dans la direction périphérique.

4. Appareil de saisie selon la revendication 1, dans lequel les premier et second aimants (14a, 14b) sont disposés de manière diamétralement opposée l'un par rapport à l'autre, ce qui correspond à un diamètre (24) du disque circulaire (10), et les premier et second capteurs magnétiques (16a, 16b) sont disposés du même côté de chacun des aimants (14a, 14b) par rapport audit diamètre (24), si bien que, dans la rotation du disque circulaire (10), une première plaque ferromagnétique (12a) arrive à une distance prédéterminée d'un premier capteur magnétique (16a) avant qu'une seconde plaque ferromagnétique (12b), à l'extrémité opposée du diamètre (24) du disque circulaire (10), n'arrive à la distance prédéterminée d'un second capteur magnétique (16b).

5. Appareil de saisie selon la revendication 1, dans lequel une force magnétique entre l'une des plaques ferromagnétiques (12a, 12b) et l'un desdits aimants (14a, 14b) provoque une résistance à la rotation qui est perceptible par un utilisateur lorsque l'une desdites plaques ferromagnétiques (12a, 12b) passe à ladite distance prédéterminée de l'un desdits aimants (14a, 14b) tandis que ledit utilisateur tourne le disque circulaire (10).

6. Appareil de saisie selon la revendication 1,
**caractérisé en ce que** :
la carte de circuits (18) comprend une pluralité d'aimants (14a, 14b) et une pluralité de capteurs magnétiques (16a, 16b), chaque capteur magnétique (16a, 16b) étant placé adjacent à un aimant (14a, 14b) correspondant, son axe de sensibilité étant parallèle à l'aimant ;
dans lequel chacun des aimants (14a, 14b) et chacun des capteurs magnétiques (16a, 16b) correspondants est disposé près de la périphérie dudit disque circulaire (10).

7. Appareil de saisie selon la revendication 1, dans lequel les capteurs magnétiques (16a, 16b) sont conçus pour produire lesdits signaux détectables en réponse à un champ magnétique concentré formé par au moins l'aimant (14a, 14b), le capteur magnétique (16a, 16b) et la plaque ferromagnétique (12a, 12b) lorsque l'une des plaques ferromagnétiques (12a, 12b) passe au-dessus de l'une des combinaisons aimant-capteur.

8. Appareil de saisie selon l'une quelconque des revendications précédentes, dans lequel le dispositif électronique est un téléphone mobile.

9. Procédé de fonctionnement par détection sans contact d'un dispositif de saisie, le dispositif de saisie comprenant :
un organe rotatif (10) possédant plusieurs éléments ferromagnétiques (12a, 12b), chacun étant disposé à la même distance radiale d'un centre de l'organe rotatif, dans lequel l'organe rotatif est un disque (10) substantiellement circulaire et les éléments ferromagnétiques sont des plaques ferromagnétiques (12a, 12b) adjacentes à la périphérie dudit disque circulaire (10) et fixées sur ledit disque circulaire (10) ; et
une carte de circuits (18) possédant des premier et second aimants (14a, 14b) et des premier et second capteurs magnétiques (16a, 16b), chacun étant adjacent à l'aimant correspondant et étant orienté de manière magnétiquement parallèle audit aimant correspondant afin de former des première et seconde combinaisons aimant-capteur, disposées à substantiellement la même distance radiale que lesdits éléments ferromagnétiques (12a, 12b), dans lequel les aimants (14a, 14b) desdites première et seconde combinaisons aimant-capteur sont disposés symétriquement, adjacents à la périphérie du disque circulaire (10) et les capteurs magnétiques (16a, 16b) desdites combinaisons aimant-capteur sont disposés de manière asymétrique l'un par rapport à l'autre ;
le procédé comprenant les étapes suivantes :
faire passer lesdites plaques ferromagnétiques (12a, 12b) au-dessus des combinaisons aimant-capteur en faisant tourner le disque circulaire (10) ;
produire des signaux détectables par les capteurs magnétiques (16a, 16b) en réponse au passage des plaques ferromagnétiques (12a, 12b) au-dessus des combinaisons aimant-capteur ; et
déterminer une direction de rotation du disque circulaire (10) sur la base de l'ordre dans lequel les capteurs magnétiques (16a, 16b) produisent les signaux détectables.

10. Procédé selon la revendication 9, dans lequel la production de signaux détectables comprend la production de signaux détectables en réponse à la détection d'un champ magnétique concentré entre l'aimant (14a, 14b), le capteur magnétique et l'une des plaques ferromagnétiques (12a, 12b).

11. Procédé selon la revendication 9, comprenant en outre l'étape consistant à :
produire une résistance à la rotation, qui est perceptible par un utilisateur, et qui s'oppose à la rotation du disque circulaire (10) du fait d'une force magnétique entre l'une desdites plaques ferromagnétiques et l'un desdits aimants lorsque l'une des plaques ferromagnétiques (12a, 12b) passe à la distance prédéterminée de l'aimant (14a, 14b), tandis que ledit utilisateur tourne le disque circulaire.

12. Procédé selon la revendication 9, comprenant en outre l'étape consistant à déterminer la direction de rotation du disque circulaire (10) en utilisant une pluralité d'aimants (14a, 14b).

13. Procédé selon la revendication 9, dans lequel les premier et second aimants (14a, 14b) sont disposés de manière diamétralement opposée l'un par rapport à l'autre, ce qui correspond à un diamètre (24) du disque circulaire (10), et les premier et second capteurs magnétiques (16a, 16b) sont disposés du même côté de chacun des aimants (14a, 14b) par rapport audit diamètre (24), si bien que, dans la rotation du disque circulaire (10), une première plaque ferromagnétique (12a) arrive à une distance prédéterminée d'un premier capteur magnétique (16a) avant qu'une seconde plaque ferromagnétique (12b), à l'extrémité opposée du diamètre (24) du disque circulaire (10), n'arrive à la distance prédéterminée d'un second capteur magnétique (16b) et dans lequel la détermination de la direction de rotation du disque circulaire (10) comprend l'étape consistant à :
déterminer l'ordre dans lequel les premier et second capteurs magnétiques (16a, 16b) produisent leurs signaux détectables respectifs.
